(19) **Europäisches Patentamt / European Patent Office / Office européen des brevets**

(11) **EP 1 988 554 A1**

(12) **EUROPEAN PATENT APPLICATION**
published in accordance with Art. 158(3) EPC

(43) Date of publication:
**05.11.2008 Bulletin 2008/45**

(51) Int Cl.:
*H01C 7/00* (2006.01)     *G01K 7/18* (2006.01)
*H01C 7/02* (2006.01)

(21) Application number: **07714013.5**

(22) Date of filing: **09.02.2007**

(86) International application number:
**PCT/JP2007/052401**

(87) International publication number:
**WO 2007/091686 (16.08.2007 Gazette 2007/33)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.02.2006 JP 2006032549**
**30.03.2006 JP 2006094153**
**05.04.2006 JP 2006104213**

(71) Applicant: **Mitsui Mining & Smelting Co., Ltd Tokyo 141-8584 (JP)**

(72) Inventors:
• **WADA, Mitsuhiro**
**Ageo-shi, Saitama 362-0021 (JP)**

• **IKEDA, Makoto**
**Ageo-shi, Saitama 362-0021 (JP)**
• **TOMONARI, Kenji**
**Ageo-shi, Saitama 362-0021 (JP)**
• **INOUE, Shinichi**
**Ageo-shi, Saitama 362-0021 (JP)**
• **SEKIMORI, Hideshi**
**Ageo-shi, Saitama 362-0021 (JP)**

(74) Representative: **Hall, Matthew Benjamin et al Frank B. Dehn & Co.**
**St Bride's House**
**10 Salisbury Square**
**London**
**EC4Y 8JD (GB)**

(54) **LAMINATE, THIN FILM SENSOR, THIN FILM SENSOR MODULE, AND METHOD FOR MANUFACTURING THE THIN FILM SENSOR**

(57)     A laminate of the present invention includes an insulating substrate, and a temperature-sensitive resistor made of crystals of a metal based on a platinum group element and laminated on the insulating substrate; and has a percentage of (111) planes of crystals oriented at 10° or less from the normal direction (ND direction) in a layer of the temperature-sensitive resistor being 90 % or more. According to the present invention, by controlling the orientation of crystals forming the temperature-sensitive resistor, laminates suitable as a thin-film sensor, thin-film sensors comprising the laminate, thin-film sensor modules comprising the thin-film sensor, and methods for producing the thin-film sensors are provided.

[Fig. 1]

EP 1 988 554 A1

**Description**

TECHNICAL FIELD

The present invention relates to laminates, thin-film sensors, thin-film sensor modules and methods for producing the thin-film sensors.

BACKGROUND ART

Thin-film sensor modules are used in temperature sensors and the like to enable them to perform their function of measuring temperature of objects or fluids. Thin-film sensor modules having temperature-sensitive resistors are widely used. They convert changes in amount of heat into electric signals and detect temperatures. From the viewpoint of sensitivity in particular, thin-film sensor modules that have platinum elements with a large absolute value of temperature coefficient of resistance are common. However, enhanced resistivity is still needed..

As generally known in the art, the temperature coefficients of resistance of resistors change depending on the existence form of crystals forming the resistors (Non-patent Document 1). For example, Patent Document 1 and Non-patent Document 2 disclose techniques wherein a laminate of formed films is heat treated to increase the diameter of crystal grains forming the resistor and thereby to increase the sensitivity.

To increase the diameter of crystal grains forming an temperature-sensitive resistor, a temperature-sensitive resistor such as platinum may be deposited patternwise on a substrate by plating or deposition and be thereafter heat treated at approximately several hundred to a thousand degrees Celsius to grow the crystal.

Although higher sensitivity may be achieved by growing the crystal under severe heating conditions, such treatment entails a large amount of heat. In addition, facilities capable of enduring such amount of heat are necessary, which adds costs. Further, heat treatment increases the surface roughness of a thin-film sensor and causes low production stability. Furthermore, satisfactory electrical properties (temperature coefficient of resistance, TCR, and the like) have not been obtained only by heat treatment.

Patent Document 2 teaches that a layer of (for example) titanium is provided between a platinum thin-film and a substrate in the production of platinum thin-film resistors to increase the adhesion therebetween.

In the production of platinum thin-film resistors according to Patent Document 1, a titanium layer is provided between a platinum thin-film and a substrate to increase the adhesion of the platinum thin-film with the substrate, and oxygen is mixed in a sputtering gas for the formation of the platinum thin-film or the titanium layer so that annealing may be performed at high temperatures to increase sufficiently the temperature coefficient of resistance of the platinum thin-film.

However, the adhesion between the platinum thin-film and the substrate is still insufficient.

Patent Document 1: JP-A-2001-291607
Patent Document 2: JP-A-H11-354302 Non-patent Document 1: HAKUMAKU, BIRYUUSHI NO KOUZOU TO BUSSEI (thin-films, structures of fine particles and properties), MARUZEN, pp. 139-156 (1974)
Non-patent Document 2: KOU TCR HAKKIN HAKUMAKU NO KAIHATSU (development of high TCR platinum thin-films), IEEE Trans. SM., vol. 124, No. 7, pp. 242-247 (2004)

DISCLOSURE OF THE INVENTION

PROBLEMS TO BE SOLVED BY THE INVENTION

The present invention has been made in light of the problems. It is therefore an object of the present invention to provide a laminate suitable as a thin-film sensor that achieved high sensitivity, without using a technique to enormously enlarge crystal grains, a thin-film sensor comprising the laminate, a thin-film sensor module comprising the thin-film sensor, and a method for producing the thin-film sensor.

Another object of the present invention is to provide a laminate suitable as a thin-film sensor that is highly sensitive and in which a temperature-sensitive resistor is difficult to peel off, a thin-film sensor comprising the laminate, and a thin-film sensor module comprising the thin-film sensor.

The present invention has been made in light of the problems, and further another object of the present is to a provide a thin-film sensor that can achieve high sensitivity by increasing the mean grain diameter of crystal grains while suppressing the enormous enlargement of only a part of crystal grains and the increase of the surface roughness of a temperature-sensitive resistor, without depending on the heat treatment conditions after film forming, a thin-film sensor module comprising the thin-film sensor, and method for producing the thin-film sensor.

Further another object of the present is to a provide a thin-film sensor that does not increase the surface roughness even by heat treatment after film forming while obtaining favorable electrical properties, a thin-film sensor module comprising the thin-film sensor, and a method for producing the thin-film sensor.

MEANS FOR SOLVING THE PROBLEMS

A laminate of the present invention comprises an insulating substrate, and a temperature-sensitive resistor made of crystals of a metal based on a platinum group element and laminated on the insulating substrate; and has a percentage of (111) planes of the crystals oriented at 10° or less from the normal direction (ND direction) in a layer of the temperature-sensitive resistor being 90% or more.

The laminate preferably further comprises an adhesion layer made of a material that is based on a transition metal between the insulating substrate and the temperature-sensitive resistor.

The laminate preferably further comprises a silicon compound layer made of a compound comprising silicon and an element selected from the group consisting of carbon, nitrogen, fluorine and oxygen between the insulating substrate and the adhesion layer.

The crystals preferably have a fiber-like orientation texture and (111) planes of the crystals in the fiber-like orientation texture have axis of rotation that is vertical to a layer of the temperature-sensitive resistor.

The crystals preferably have a grain diameter of 0.2 $\mu$m or' more.

The platinum group element is preferably platinum.

A thin-film sensor of the present invention comprises the above laminate.

A preferred embodiment of the thin-film sensor may be a thin-film sensor (hereinafter also referred to as a "thin-film sensor A"), having the percentage of (111) planes of the crystals oriented at 10° or less from the normal direction (ND direction) in a layer of the temperature-sensitive resistor being 99% or more.

In the thin-film sensor A, the temperature-sensitive resistor preferably has a surface roughness Ra of 50 nm or less and preferably has a surface roughness Rz of 1 $\mu$m or less, and the crystals preferably have a grain diameter of 0.4 $\mu$m or more.

A method for producing the thin-film sensor A comprises laminating a temperature-sensitive resistor made of a crystal of a metal having a platinum group element as a main component thereof on the insulating substrate by sputtering the metal, setting a temperature of the insulating substrate at 400 to 800°C.

The sputtering is preferably performed under the following conditions:

Film forming pressure: 0.10 Pa or less; and
Film forming electric power: 50 to 100 W.

A preferred embodiment of the thin-film sensor may also be a thin-film sensor (hereinafter also referred to as a "thin-film sensor B"), having the percentage of (111) planes of the crystals oriented at 10° or less from the normal direction (ND direction) in a layer of the temperature-sensitive resistor being 99% or more, wherein the temperature-sensitive resister has a surface roughness Rz of 0.1 $\mu$m or less and the crystals have a grain diameter of 0.3 $\mu$m or more.

A method for producing the thin-film sensor B may be a production method comprising:

laminating the temperature-sensitive resistor on the insulating substrate to obtain a temperature-sensitive laminate; and
subjecting the temperature-sensitive laminate to heat treatment in an inert gas atmosphere having an oxygen partial pressure of 0.001 ppt or more to 1 ppm or less.

The thin-film sensor may be a sensor selected from the group consisting of a temperature sensor, a flow sensor, a specific heat sensor, a thermal conductivity sensor, a concentration sensor, a liquid identification sensor, a strain sensor, a stress sensor and a humidity sensor.

A thin-film sensor module of the present invention comprises the above thin-film sensor.

EFFECTS OF THE INVENTION

The present invention provides laminates suitable as a thin-film sensor, thin-film sensors comprising the laminate, thin-film sensor modules comprising the thin-film sensor, and methods for producing the thin-film sensors by controlling the orientation of crystals forming a temperature sensitive resistor.

One of the embodiments of the present invention provides laminates suitable as a thin-film sensor that is highly sensitive and in which a temperature-sensitive resistor is difficult to peel off, thin-film sensors comprising the laminate, thin-film sensor modules comprising the thin-film sensor; and methods for producing the thin-film sensors.

One of the embodiments of the present invention provides a thin-film sensor (thin-film sensor A) having an increased temperature coefficient of resistance of a temperature-sensitive resistor and an improved sensitivity, a thin-film sensor module comprising the thin-film sensor, and a method for producing the thin-film sensor by controlling the orientation of a crystal forming the temperature-sensitive resistor and the crystal structure to increase the mean grain diameter of crystal grains while suppressing the enormous enlargement of only a part of crystal grains and the increase of the surface roughness of a temperature-sensitive resistor.

One of the embodiments of the present invention provides a thin-film sensor (thin-film sensor B) that does not increase the surface roughness even by heat the treatment after film forming while obtaining the favorable electric properties, a thin-film sensor module comrising the thin-film sensor, and a method for producing the thin-film sensor.

BRIEF DESCRIPTION OF THE DRAWINGS

Fig. 1 is a schematic view of one of the embodiments of a thin-film sensor (for example, a temperature sensor) of the present invention.

Fig. 2 is a schematic view of one of the embodiments of a thin-film sensor (for example, a temperature sensor) of the present invention.

Fig. 3 is a schematic view illustrating a thin-film sensor module (for example, a temperature sensor module) of the present invention.

Fig. 4 is a schematic cross-sectional view illustrating a thin-film sensor module (for example, a temperature sensor module) of the present invention, wherein (a) is a longitudinal sectional plane view and (b) is a longitudinal sectional side view.

Fig. 5 shows a pole figure for (111) planes in a temperature-sensitive resistor of the laminate 1 obtained in Comparative Example 1.

Fig. 6 shows a pole figure for (111) planes in a temperature-sensitive resistor of the thin-film sensor 1 obtained in Example 1.

Fig. 7 shows a pole figure for (111) planes in a temperature-sensitive resistor of the thin-film sensor 2 obtained in Example 2.

Fig. 8 shows a pole figure for (111) planes in a temperature-sensitive resistor of the thin-film sensor 4 obtained in Example 4.

Fig. 9 shows a pole figure for (111) planes in a temperature-sensitive resistor of the thin-film sensor 5 obtained in Example 5.

DESCRIPTION OF NUMERALS

10    Thin-film sensor (for example, temperature sensor) (thin-film chip)
11    Insulating substrate
12    Silicon compound layer
13    Adhesion layer
14    Temperature-sensitive resistor
16    Protective film
18    Bonding pad
20    Thin-film sensor module (for example, temperature sensor module)
22    Housing
24    Fin plate
26    Output terminal
32    Bonding wire
34    First large-diameter part
36    Second large-diameter part
38    Notch

BEST MODE FOR CARRYING OUT THE INVENTION

<Laminates and Thin-film Sensors>

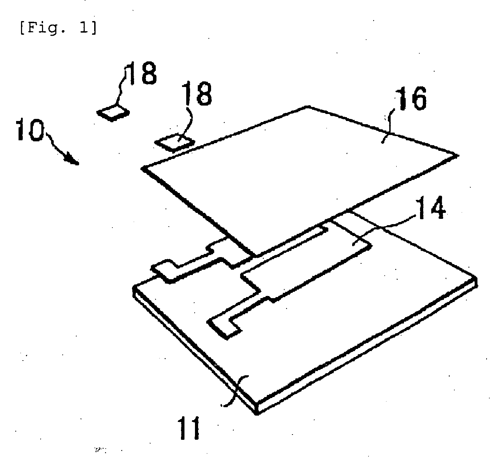

Fig. 1 is a schematic view of a laminate or a thin-film sensor (thin-film chip) of the present invention. A laminate and a thin-film sensor 10 comprising the laminate of the present invention have at least an insulating substrate 11 having electrically insulating properties and a temperature-sensitive resistor 14.

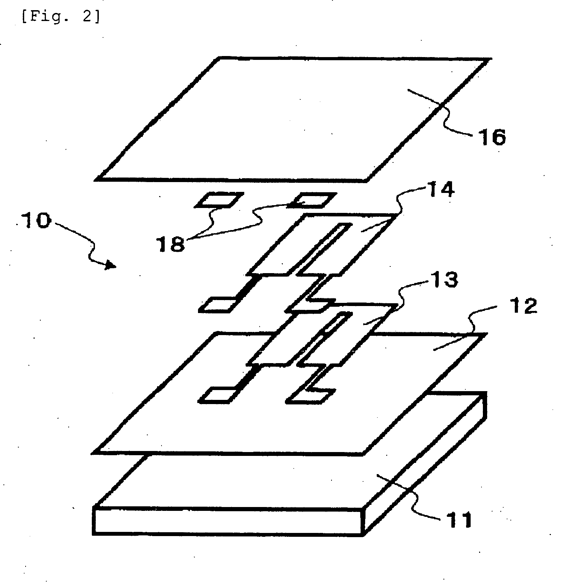

As shown in Fig. 2, the thin-film sensor 10 may have an adhesion layer 13 between the insulating substrate 11 and the temperature-sensitive resistor 14 between the insulating substrate 11 and the temperature-sensitive resistor 14 and may further have a silicon compound layer 12 between the insulating substrate 11 and the adhesion layer 13 to increase the adhesion between the insulating substrate 11 and the temperature-sensitive resistor 14.

The thin-film sensor 10 may have the protective layer 16 on a surface of the thin-film sensor 10 to prevent physical damages of the thin-film sensor. The thin-film sensor 10 may have a bonding pad 18 that electrically connects the film sensor 10 and an outside member.

In the invention, the direction extending from the insulating substrate to the temperature-sensitive resistor may be defined as "upward" for convenience.

The insulating substrate 11 may be made of any insulating material without limitation. Exemplary materials include silicon and alumina. The insulating substrate 11 may have various shapes. It may be rectangular as shown in Fig. 1, elliptical or circular. The insulating substrate 11 may have a film thickness of approximately 300 to 1,000 $\mu$m.

The temperature-sensitive resistor 14 is not particularly limited as long as it is made of a material that has a large temperature coefficient of resistance and is thermally stable. Examples of the materials for the temperature-sensitive resistor 14 include a metal based on at least one metal selected from platinum group metals (ruthenium, rhodium, palladium, osmium, iridium and platinum) and an alloy of these metals. In particular, platinum is more preferred in view of easiness in film production, stability of properties, and cost. The temperature-sensitive resistor 14 may be formed of the above material in a desired pattern or a desired thickness, for example about 0.1 to 1 $\mu$m.

A material for the adhesion layer 13 may be selected from materials and ranges that do not influence the temperature-resistance properties of the insulating substrate 11. Examples include a material that is based on a transition metal and may contain a metal other than the transition metal. The materials based on a transition metal include titanium (Ti), chromium (Cr), $TiO_2$ and TiBaO, with titanium and chromium being preferred in view of adhesion. The materials based on a transition metal generally contain transition metals at 10 to 100 wt%, and preferably at 60 to 100 wt%. The adhesion layer has a thickness of, for example, preferably 0.002 to 0.1 $\mu$m, and more preferably 0.005 to 0.05 $\mu$m.

The silicon compound layer 12 comprises a compound comprising silicon and an element selected from the group consisting of carbon, nitrogen, fluorine and oxygen. Examples of this compound include $SiO_2$, SiN, SiON, SiC, SiOC and SiOF, with $SiO_2$ being preferred in view of easy film production.

The silicon compound layer 12 has a thickness of preferably 50 to 5,000 nm, more preferably 100 to 1,000 nm.

The temperature-sensitive resistor 14 may be firmly bonded to the insulating substrate 11 with the adhesion layer 13 and the silicon compound layer 12 in between and will not separate from the insulating substrate 11.

The protective layer 16 may be made of any material without limitation as long as the above-mentioned objects are achieved. Exemplary materials are resins and glasses. The protective layer 16 may be approximately 1 $\mu$m in thickness.

The bonding pad 18 may be made of any material without limitation as long as it has good electrical conductivity. Exemplary materials are gold (Au) and platinum. The bonding pad 18 may have various shapes depending on application. For example, it may be approximately 0.2 mm in length, 0.15 mm in width and 0.1 $\mu$m in thickness.

<Existence Form of Crystals of Temperature-Sensitive Resistor in the Present Invention>

In the laminate and the thin-film sensor comprising the laminate of the present invention, a crystal forming a temperature-sensitive resistor has a specific orientation. In the present invention, the orientation is defined as the "orientation properties" described below. In the present invention, the "orientation properties" indicate a percentage of (111) planes of the crystals (that is, a crystal forming a temperature-sensitive resistor) oriented at 10° or less from the normal direction (ND direction) in a layer of the temperature-sensitive resistor. In the thin-film sensor of the present invention, the percentage is preferably 90% or more and more preferably 99% or more. If the value of the orientation properties is smaller than the range, unless the crystal particles are coarsened, a sufficient temperature coefficient of resistance is not obtained, and a high sensitivity of a thin-film sensor is not achieved. The value of the "orientation properties" is a value determined by the method described in the column of Examples described later.

It is generally known that the crystalline form in temperature-sensitive resistors determines how the resistance value will change with temperature increase of the electrical resistors. The gradient of temperature coefficient of resistance is known to become sharp with change in crystalline form, in particular with increase of crystal grain diameters. Increasing grain diameters is a common method for improving the sensitivity of thin-film sensors.

The present invention focuses on the forms of crystals forming temperature-sensitive resistors. In detail, the present inventors have found that the temperature coefficient of resistance of temperature-sensitive resistors is increased by controlling the crystalline form, in particular the orientation properties of the crystal. It is not known exactly why controlling the orientation properties improves the temperature coefficient of resistance, but one reason is probably that electrical properties of the crystal are enhanced by orienting the crystal in a specific direction.

In a preferred embodiment, the crystals forming the temperature-sensitive resistor have a fiber-like orientation texture and (111) planes of the crystals in the fiber-like orientation texture have axis of rotation that is vertical to a layer of the temperature-sensitive resistor. According to this preferred embodiment, electrical properties are enhanced. The fiber-like orientation texture may be observed by various methods used for the observation of such textures, and may be observed with an EBSD apparatus as described below.

In the invention, the orientation properties of crystals were determined by EBSD (Electron Backscatter Diffraction Pattern) method. X-Ray diffractometers (XRD) are generally used for the determination of crystal orientation of inorganic materials. However, the diffractometers only provide average information on the entire crystal structure and do not evaluate the form of individual crystal grains forming the crystal structure. Transmission electron microscopes (TEM) are commonly used to determine the orientation of individual crystal grains. However, it is practically impossible to evaluate statistically the crystal grains in the crystal structure.

On the other hand, EBSD apparatuses quickly determine the form of individual crystal grains and enable the determination of crystal grain diameters or grain size distribution and the evaluation of crystal orientation or strain calculation.

The crystals forming a temperature-sensitive resistor have a grain diameter of 0.2 $\mu$m or more, and more preferably 0.4 $\mu$m or mores. The upper limit of the grain diameter is not particularly limited, but is generally about 5.0 $\mu$m. The value of the crystal grain diameter is a value determined by the method described in the column of Examples described later.

The thin-film sensor of the present invention has a temperature coefficient of resistance of preferably 3,000 ppm/K or more, more preferably 3,300 ppm/K or more, and the upper limit of the temperature coefficient of resistance is approximately 3,900 ppm/K.

The thin-film sensor of the present invention may be used in apparatuses for measuring an index that influences the resistance value of the temperature sensitive-resistor. Examples of the apparatuses include a temperature sensor, a flow sensor, a specific heat sensor, a thermal conductivity sensor, a concentration sensor, a liquid identification sensor, a strain sensor, a stress sensor and a humidity sensor.

(Thin-film Sensor A)

Examples of the preferred embodiment of the thin-film sensor include a thin-film sensor (thin-film sensor A) that has the percentage of (111) planes of the crystals oriented at 10° or less from the normal direction (ND direction) in a layer of the temperature-sensitive resistor being 99% or more.

In the thin-film sensor A, the temperature-sensitive resistor has a surface roughness (Ra) of preferably 50 nm or less, more preferably 30 nm or less, and the lower limit of the surface roughness (Ra) is not particularly limited, but is usually approximately 1 nm. In addition, the temperature-sensitive resistor has a surface roughness (Rz) of preferably 1 $\mu$m or less, more preferably 0.9 $\mu$m, and the lower limit of the surface roughness (Rz) is not particularly limited, but is usually approximately 0.1 $\mu$m. If these parameters are outside the above ranges, stable electrical properties may not be obtained in pattern forming, and the productivity may be reduced.

In the thin-film sensor A, the crystals forming a temperature-sensitive resistor have a grain diameter of preferably 0.4 $\mu$m or more, more preferably 1.0 $\mu$m or more, and the upper limit of the grain diameter is not particularly limited, but is usually approximately 5.0 $\mu$m.

(Thin-film Sensor B)

Examples of the preferred embodiment of the thin-film sensor also include a thin-film sensor (thin-film sensor B) that has the percentage of (111) planes of the crystals oriented at 10° or less from the normal direction (ND direction) in a the layer of the temperature-sensitive resistor being 99% or more, wherein the temperature-sensitive resistor has a surface roughness Rz of 0.1 $\mu$m or less and the crystals have a grain diameter of 0.3 $\mu$m or more.

In the thin-film sensor B, the temperature-sensitive resistor has a surface roughness (Rz) of preferably 0.1 $\mu$m or less, more preferably 0.07 $\mu$m or less, and the lower limit of the surface roughness (Rz) is not particularly limited, but is usually approximately 0.01 $\mu$m. If the surface roughness (Rz) is larger than the range, stable electrical properties are not obtained in pattern forming, and the productivity is reduced.

The crystals forming a temperature-sensitive resistor have a grain diameter of 0. 3 $\mu$m or more, more preferably 0.4 $\mu$m or more, and the upper limit of the grain diameter is not particularly limited, but is usually approximately 5.0 $\mu$m.

<Production Methods for Laminate and Thin-film Sensor>

Methods for producing the above laminate and the above thin-film sensor comprising the laminate of the present invention will be explained. Preferred methods for producing the thin-film sensor A will be planed later.

In the production of the thin-film sensor of the present invention, at first, the temperature-sensitive resistor is laminated on the insulating substrate by a vapor deposition means such as sputtering.

In the sputtering, an inert gas as an introduction gas such as argon may contain oxygen gas. The amount of oxygen mixed with the inert gas may be, for example, in the range of 0.5 to 30% by volume at standard state, and preferably in the range of 2 to 20% by volume. If the amount is less than 0.5% by volume, part of the metal atoms forming the adhesion layer will diffuse into the temperature-sensitive resistor, thereby reducing the temperature coefficient of resistance (TCR). If the amount is 30% by volume or more, oxygen will dissolve in the crystal forming the temperature-sensitive resistor, thereby reducing the temperature coefficient of resistance (TCR).

For the production of a platinum thin-film as the temperature-sensitive resistor, deposition may be carried out under the following conditions.

Deposition means: Sputtering
Apparatus: Magnetron sputtering apparatus
Ultimate vacuum: $6.0\times10^{-5}$ Pa or less
Film forming pressure: 0.1 to 0.8 Pa
Gas flow rate: 10 to 180 SCCM
Film forming electric power: 400 to 1400 W
Film forming temperature: Room temperature to 250°C

To prevent oxygen from dissolving or being incorporated as impurities in the crystal forming the temperature-sensitive resistor thereby to reduce the temperature coefficient of resistance (TCR) of the temperature-sensitive resistor, the temperature-sensitive resistor is preferably sputtered consecutively without contact with air, oxygen or water.

When the adhesion layer is provided in the laminate and thin-film sensor comprising the laminate of the present invention, the adhesion layer may be deposited on the insulating substrate by methods such as sputtering prior to the formation of the temperature-sensitive resistor, and thereafter the temperature-sensitive resistor may be formed as described above. The production of the adhesion layer is preferably followed by the subsequent steps without contact with air, oxygen or water. Production conditions for the adhesion layer are not particularly limited and may be selected appropriately in accordance with the conditions for the subsequent production of the temperature-sensitive resistor. For the production of a titanium (Ti) layer as the adhesion layer, deposition may be carried out under the following conditions.

Deposition means: Sputtering
Apparatus: Magnetron sputtering apparatus
Ultimate vacuum: $6.0\times10^{-5}$ Pa or less
Film forming pressure: 0.1 to 2 Pa
Gas flow rate: 10 to 180 SCCM
Film forming electric power: 400 to 1400 W
Film forming temperature: Room temperature to 250°C

When the silicon compound layer is provided in the thin-film sensor, the silicon compound layer is formed on a surface of the insulating substrate prior to the formation of the adhesion layer.

The silicon compound layer may be formed by methods such as sol-gel methods, spin coating, CVD and sputtering.' Exemplary production conditions are as follows.

Laminating means: Spin coating
Apparatus: Spin coater
Raw material: $SiO_2$-based film-forming coating material (SOG)
Rotation number: 1,000 to 6,000 rpm
Temperature: 450 to 1,000°C

Next, the resulting laminate (that is, a laminate including the insulating substrate, the temperature-sensitive resistor, optionally the adhesion layer and optionally the silicon compound layer) is annealed at 900 to 1,100°C to give a thin-film sensor.

If the annealing temperature is less than 900°C, the obtainable thin-film sensor tends to have a low temperature coefficient of resistance. Annealing at above 1,100°C tends to deteriorate the surface condition of the thin-film sensor.

The annealing time may be, for example, in the range of 4 hours to less than 8 hours. If the annealing time is less than 4 hours, that is, if the annealing time is excessively short, the temperature-sensitive resistor will greatly change the resistance value with time. If the annealing time is more than 8 hours, the platinum crystal grains grow excessively in size to increase the surface roughness, and the uniformity in the plate tends to be reduced.

When the thin-film sensor B is produced, the annealing is preferably performed under the following conditions. That is, the annealing is performed in an argon atmosphere in which the partial pressure of oxygen is 0.001 ppt or more to 1 ppm or less. As the inert gas, a gas, which is inert to a material forming the insulating substrate, the adhesion layer and/or the temperature-sensitive resistor, may be arbitrarily selected, and preferred is argon. The purity of the inert gas preferably is 99.9999% or more. If the partial pressure of oxygen is higher than the range, the surface roughness such as the arithmetic mean roughness (Ra) and ten-point mean roughness (Rz) of the temperature-sensitive resistor after heat treatment is increased and the productivity of the thin-film sensor is reduced. If the partial pressure of oxygen is less than 0.001 ppt, a special equipment and the like are required for achieving the atmosphere, and the production cost is increased.

The temperature-sensitive resistor may be patterned to various shapes by etching or the like. For example, the temperature-sensitive resistor may be shaped to a meandering pattern with, for example, a width of 5 to 25 $\mu$m and, for example, a total length of 4 to 23 cm by etching or the like.

(Preferred Production Methods for Thin-film Sensor A)

Preferred production methods for the thin-film sensor A will be explained. In the production method for the thin-film sensor A, at first, the temperature-sensitive resistor is laminated on the insulating substrate by a deposition means such as sputtering.

The sputtering in forming a temperature-sensitive resistor is performed under the condition that the substrate temperature is at 400 to 800°C and preferably at 400 to 600°C. If the substrate temperature is lower than the range, the temperature coefficient of resistance of the temperature-sensitive resistor tends not to increase, and if the substrate temperature is higher than the range, the surface roughness of the temperature-sensitive resistor tends to increase.

The sputtering may be performed in various atmospheres, especially under a film forming pressure of preferably 0.10 Pa or lower and more preferably of 0.05 Pa or lower. The lower limit is usually approximately 0.001 Pa. If the film forming pressure is higher than the range, a suitable orientation is not obtained in the crystal forming the temperature-sensitive resistor and the temperature coefficient of resistance of the thin-film sensor A is not adequately increased.

The sputtering is preferably performed using a direct-current power source. If the direct-current power source is not used (for example, a high-frequency (RF) power source and the like), there is a tendency that the surface roughness of the temperature-sensitive resistor is increased and the temperature coefficient of resistance of the thin-film sensor A is not adequately increased.

For the production of a platinum thin-film as the temperature-sensitive resistor, other conditions in performing the sputtering may be set, for example, as follows:

Ultimate vacuum: Less than $2.0\times10^{-5}$ Pa,
Gas flow rate: 20 to 50 SCCM, and
Film forming electric power: 50 to 100 W.

To prevent oxygen from dissolving or being incorporated as impurities in the crystal forming the temperature-sensitive resistor thereby to reduce the temperature coefficient of resistance (TCR) of the temperature-sensitive resistor, the temperature-sensitive resistor is preferable sputtered consecutively without contact with air, oxygen or water.

When the adhesion layer is provided in the thin-film sensor A, the adhesion layer may be deposited on the insulating substrate by methods such as sputtering prior to the formation of the temperature-sensitive resistor, and thereafter the temperature-sensitive resistor may be formed as described above. The production of the adhesion layer is preferably followed by the subsequent steps without contact with air, oxygen or water. Production conditions for the adhesion layer are not particularly limited and may be selected appropriately in accordance with the conditions for the subsequent production of the temperature-sensitive resistor. For the production of a titanium (Ti) layer as the adhesion layer, deposition may be carried out under the following conditions.

Deposition means: Sputtering
Apparatus: Magnetron sputtering apparatus
Ultimate vacuum: Less than $2.0\times10^{-5}$ Pa
Film forming pressure: 0.10 Pa or lower

Gas flow rate: 20 to 50 SCCM
Film forming electric power: 50 to 100 W
Film forming temperature: Room temperature to 800°C

When the silicon compound layer is provided in the thin-film sensor A, the silicon compound layer is formed on a surface of the insulating substrate prior to the formation of the adhesion layer.

The silicon compound layer may be formed by methods such as sol-gel methods, spin coating, CVD and sputtering. Exemplary production conditions are as follows.

Laminating means: Spin coating
Apparatus: Spin coater
Raw material: $SiO_2$-based film-forming coating material (SOG)
Rotation number: 1,000 to 6,000 rpm
Temperature: 450 to 1,000°C

The resulting laminate (that is, a laminate including the insulating substrate and the temperature-sensitive resistor, optionally the adhesion layer and optionally the silicon compound layer) as is may be used as the thin-film sensor A. However, the resulting laminate may be annealed at for example 500 to 1,100°C and preferably of 900 to 1,000°C to give a thin-film sensor A having higher sensitivity. If the annealing temperature exceeds 1,100°C, the surface state of the thin-film sensor A tends to deteriorate.

The annealing time may be, for example, in the range of 4 hours to less than 8 hours. If the annealing time is less than 4 hours, that is, if the annealing time is excessively short, the temperature-sensitive resistor will greatly change the resistance value with time. If the annealing time is more than 8 hours, the platinum crystal grains grow excessively in size to increase the surface roughness, and the uniformity in the plate tends to be reduced.

The temperature-sensitive resistor may be patterned to various shapes by etching or the like. For example, the temperature-sensitive resistor may be shaped to a meandering pattern with, for example, a width of 5 to 25 $\mu$m and, for example, a total length of 4 to 23 cm by etching or the like.

<Thin-film Sensor Modules>

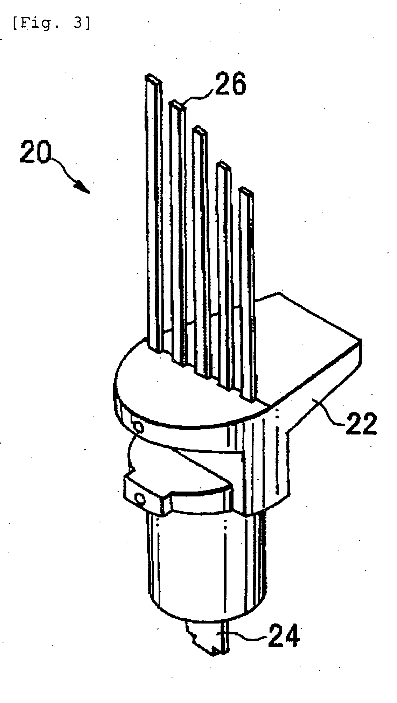

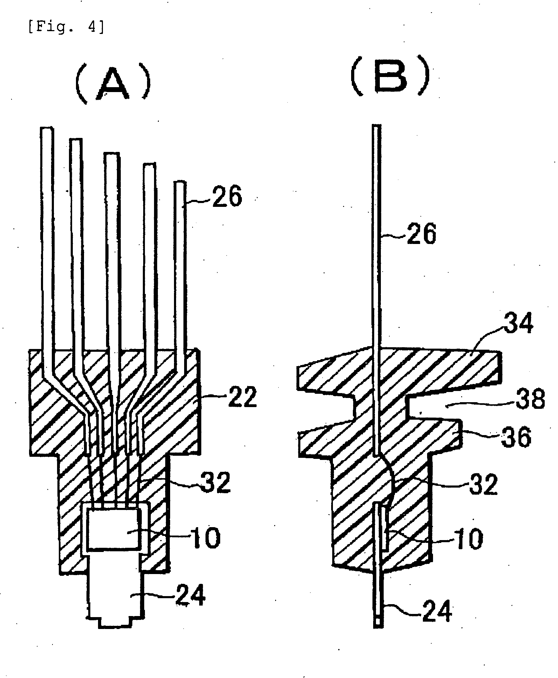

The thin-film sensor modules according to the present invention will be described. The thin-film sensor module of the invention has a member that is thermally connected with a sample object or fluid, the above-described thin-film sensor that is thermally connected with the member, and a member that is electrically connected with the thin-film sensor. This constitution is illustrated in Figs. 3 and 4.

Fig. 3 is a schematic view showing a thin-film sensor module (for example, a temperature sensor module) according to an embodiment of the present invention. Fig. 4 is a set of schematic sectional views illustrating a thin-film sensor module (for example, a temperature sensor module) according to an embodiment of the present invention, wherein (a) is a longitudinal sectional plane view and (b) is a longitudinal sectional side view. A thin-film sensor module (for example, a temperature sensor module) 20 of the invention has a thin-film sensor (for example, a temperature sensor) 10 to which a fin plate 24 and output terminals 26 are firmly bonded inside a housing 22.

The housing 22 may be made of any material having low thermal conductivity. Materials resistant to chemicals or oils may be used depending on the type of the sample object or fluid. Examples of the materials having these properties include epoxy resins, polybutylene terephthalate (PBT) and polyphenylene sulfide (PPS). The thin-film sensor module may have various shapes depending on the application of the thin-film sensor module. For example, the housing 22 as shown in Figs. 3 and 4(B) has a first large-diameter part 34 from which the output terminals 26 protrude, and a second large-diameter part 36 below the first large-diameter part 34 with a spacing therebetween; and may have a notch 38 that provides a heat insulating space between the first large-diameter part 34 and the second large-diameter part 36. The shape of the housing 22 is not limited to that described above.

The fin plate 24 may be made of any material without limitation as long as it has good thermal conductivity. Examples of the materials include copper, aluminum, tungsten, duralumin and copper-tungsten alloy. The fin plate 24 may have various shapes depending on the application of the thin-film sensor module. For example, it may be a thin plate having a thickness of approximately 200 $\mu$m. The fin plate 24 and the thin-film sensor 10 may be firmly bonded together with any thermally conductive material such as silver paste.

The output terminals 26 may be made of any material without limitation as long as the material has electrical conductivity. Examples of the materials include copper and aluminum. The output terminals 26 may be electrically connected to the thin-film sensor 10.via bonding wires 32. In Fig. 3, the output terminals 26 extending from the resin housing 2 are arranged in a straight line and gradually increase (or gradually reduce) the length in which they extend from the resin housing 2 from one end to the other of the straight line. However, the output terminals 26 may have various shapes depending on application. The shape shown in Fig. 3 permits easy attachment of a sensor pressing plate that presses downward the thin-film sensor module 20, or a flow rate-detecting circuit board that forms a circuit by being connected with the output terminals 26. The shape shown in the figure also reduces the probability that the thin-film sensor module 20 will be damaged during the attaching of the sensor pressing plate or the flow rate-detecting circuit board.

EXAMPLES

The present invention will be described by EXAMPLES below without limiting the scope of the invention.

(Comparative Example 1)

A $SiO_2$ layer having a film thickness of 300 nm was formed on an aluminum substrate (a disc having a diameter of 100 mm and a thickness of 385 $\mu$m) by a spin coating under the following conditions.

Apparatus: Spin coater
Raw material: $SiO_2$-based film-forming coating material (manufacturing by Tokyo Ohka Kogyo Co., Ltd., raw material: OCD (trade name), a siloxane-based material)
Rotation number: 1,000 rpm $\times$ 5 s $\rightarrow$ 5,000 rpm $\times$ 30 s
Temperature: 695°C

Next, a titanium layer having a film thickness of 30 nm was formed on the $SiO_2$ layer thus formed by performing sputtering using metal titanium (purity: 99.99%) as a target under the following conditions.

Apparatus: Magnetron sputtering apparatus
Ultimate vacuum: Less than $6.0 \times 10^{-5}$ Pa
Film-forming pressure: 0.86 Pa
Gas flow rate: 180 SCCM [$Ar:O_2$=10:0 (volume ratio at standard state)]
Film-forming electric power: 1,000 W (DC)
Film-forming temperature: 250°C

Subsequently, a temperature-sensitive resistor having a film thickness of 400 nm was formed on the titanium layer thus formed by performing sputtering using platinum (purity: 99.9%) as a target under the following conditions.
Apparatus: Magnetron sputtering apparatus
Ultimate vacuum: Less than $6.0 \times 10^{-5}$ Pa
Film-forming pressure: 0.18 Pa
Gas flow rate: 10 SCCM [$Ar:O_2$=9:1 (volume ratio at standard state)]
Film-forming electric power: 500 W (RF)
Film-forming temperature: 250°C

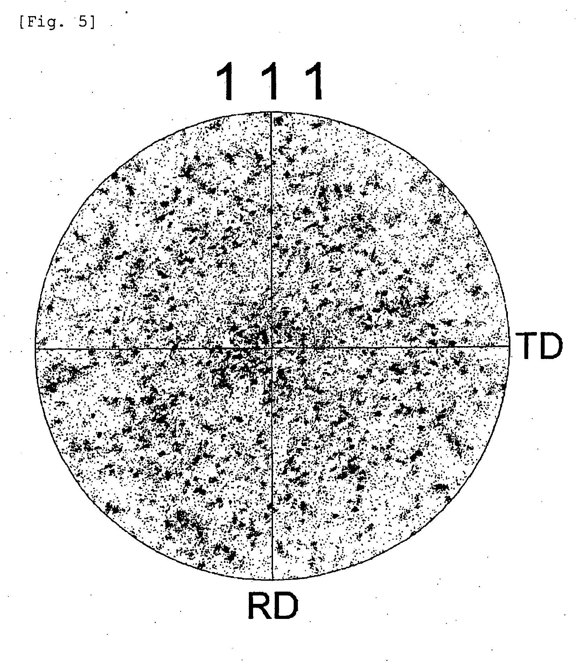

The laminate 1 thus produced was tested for temperature coefficient of resistance (TCR), crystal grain diameters, orientation properties, Ra, Rz and adhesion as described below. The results are shown in Table 1. In addition, the measurement of the pole figure for (111) planes was made. The result is shown in Fig. 5.

(Example 1)

A $SiO_2$ layer was formed on an aluminum substrate by the similar operation to that of Example 1. Thereafter, a titanium layer having a film thickness of 30 nm was formed in the same manner as Comparative Example 1 except that the conditions of forming a titanium layer were changed to the following conditions.
Apparatus: Magnetron sputtering apparatus
Ultimate vacuum: Less than $2.0 \times 10^{-5}$ Pa
Film-forming pressure: 0.03 Pa

Gas flow rate: 20 SCCM [Ar:$O_2$=10:0 (volume ratio at standard state)]
Film-forming electric power: 50 W (DC)
Film-forming temperature: 400°C

Next, a temperature-sensitive resistor having a film thickness of 400 nm was formed on the titanium layer thus formed by performing sputtering using platinum (purity: 99.9%) as a target under the following conditions.
Apparatus: Magnetron sputtering apparatus
Ultimate vacuum: Less than $2.0 \times 10^{-5}$ Pa
Film-forming pressure: 0.03 Pa
Gas flow rate: 20 SCCM [Ar:$O_2$=10:0 (volume ratio at standard state)]
Film-forming electric power: 50 W (DC)
Film-forming temperature: 400°C

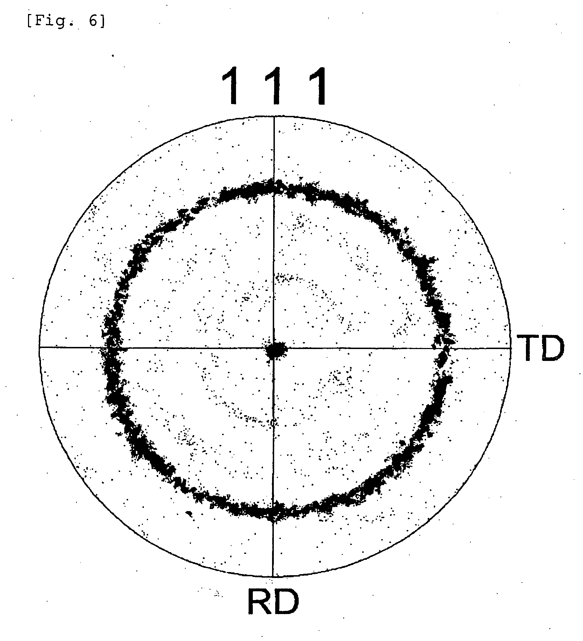

The thin-film sensor 1 thus produced was tested for temperature coefficient of resistance (TCR), crystal grain diameters, orientation properties and adhesion as described below. The results are shown in Table 1. In addition, the measurement of the pole figure for (111) planes was made. The result is shown in Fig. 6.

(Comparative Example 2)

A laminate 2 was produced in the same manner as Comparative Example 1 except that a $SiO_2$ layer was not formed.
The laminate 2 thus produced was tested for temperature coefficient of resistance (TCR), crystal grain diameters, orientation properties and adhesion as described below. The results are shown in Table 1.

(Example 2)

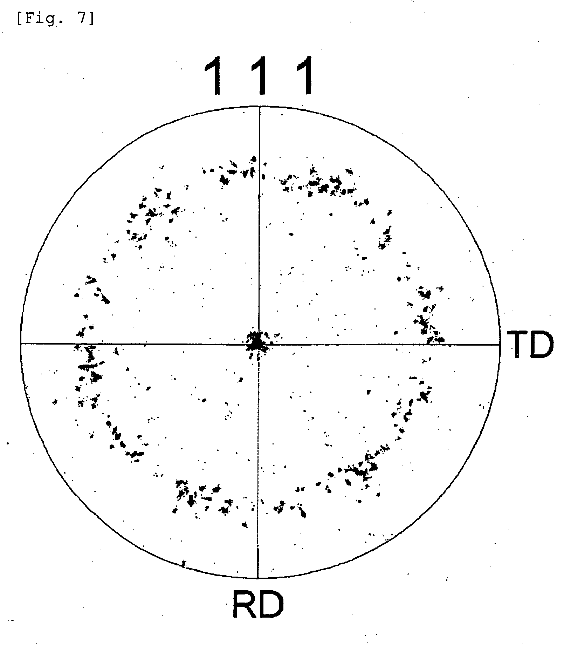

A thin-film sensor 2 (a temperature sensor 2) was obtained by heat treating the laminate 1 at 1,000°C for 4 hours under an atmospheric atmosphere. The thin-film sensor 2 was tested for temperature coefficient of resistance (TCR), crystal grain diameters, orientation properties and adhesion as described below. The results are shown in Table 1. In addition, the measurement of the pole figure for (111) planes was made. The result is shown in Fig. 7.

(Example 3)

A thin-film sensor 3 (a temperature sensor 3) was obtained by heat treating the laminate 1 at 900°C for 4 hours under an atmospheric atmosphere (oxygen partial pressure: 200). The thin-film sensor 3 was tested for temperature coefficient of resistance (TCR), crystal grain diameters, orientation properties and adhesion as described below. The results are shown in Table

(Example 4)

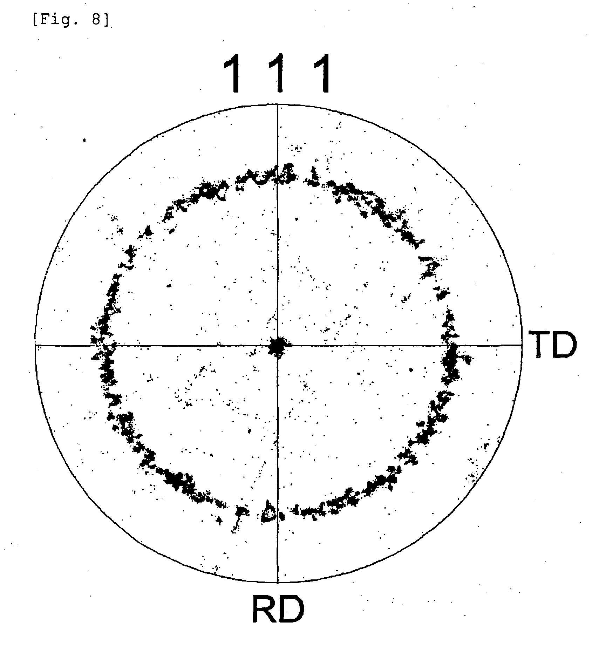

A thin-film sensor 4 (a temperature sensor 4) was obtained by heat treating the laminate 1 at 1000°C for 4 hours under an argon atmosphere. The temperature sensor 4 was tested for temperature coefficient of resistance (TCR), crystal grain diameters, orientation properties and adhesion as described below. The results are shown in Table 1. In addition, the measurement of the pole figure for (111) planes was made. The result is shown in Fig. 8.

(Comparative Example 3)

A thin-film sensor a (a temperature sensor a) was obtained by heat treating the laminate 2 at 800°C for 4 hours under an atmospheric atmosphere. The thin-film sensor a was tested for temperature coefficient of resistance (TCR), crystal grain diameters, orientation properties and adhesions as described below. The results are shown in Table 1.

(Example 5)

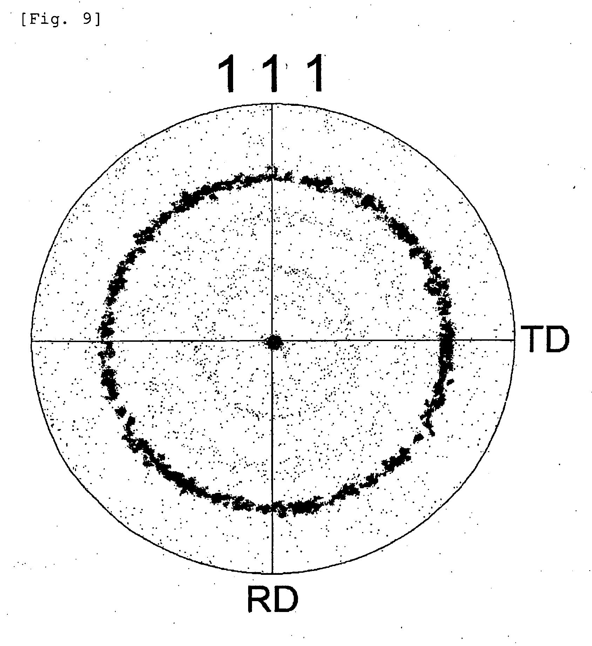

The thin-film sensor 1 was heat treated at 900°C for 4 hours under an atmospheric atmosphere. The resulting thin-film sensor 1 after the heat treatment (hereinafter also referred to as a "thin-film sensor 5") was tested for temperature coefficient of resistance (TCR), crystal grain diameters, orientation properties and adhesion as described below. The results are shown in Table 1. In addition, the measurement of the pole figure for (111) planes was made. The result is shown in Fig. 9.

(Example 6)

An argon gas was purified to obtain a purified argon gas having an argon purity of 99.9999% or more and an oxygen partial pressure of less than 0.1 ppm at standard state. The laminate 1 was heat treated at 1,000°C for 4 hours in the purified argon gas to obtain a thin-film sensor 6. The thin-film sensor 6 was tested for temperature coefficient of resistance (TCR), Ra, Rz and adhesion as described below. The results are shown in Table 1.

(Example 7)

A thin-film sensor 7 was obtained in the same manner as Example 3 except that the heat treatment was performed at 1,000°C. The thin-film sensor 7 was tested for temperature coefficient of resistance (TCR), Ra, Rz and adhesion as described below. The results are shown in Table 1.

(Comparative Example 4)

A thin-film sensor b was obtained by the same heat treatment as that of Example 6 except that the heat treatment was performed at 900°C for 4 hours at an oxygen partial pressure of less than 2 ppm under a vacuum atmosphere. The thin-film sensor b was tested for temperature coefficient of resistance (TCR), Ra, Rz and adhesion as described below. The results are shown in Table 1.

(Comparative Example 5)

A thin-film sensor c was obtained by the same heat treatment as that of Comparative Example 4 except that the temperature of the heat treatment was changed to 1,000°C. The thin-film sensor c was tested for temperature coefficient of resistance (TCR), Ra, Rz and adhesion as described below. The results are shown in Table 1.

<Crystal grain diameters>

A longitudinal section of each of the laminate and the thin-film sensor was smoothed by polishing and with focused ion beam (FIB). With respect to the smoothed longitudinal section, image data of the crystal pattern was obtained by EBSD method by means of a scanning electron microscope (JSM-6700F or JSM-7000F manufactured by JEOL Ltd.) that had a FE gun and was equipped with an EBSD apparatus (OIM Analysis, manufactured by TSL Solutions) and also by means of the supplied EBSD analyzer. The image data was analyzed while selecting "Grain Size" from the analysis menu of an EBSD analysis program (OIM Analysis, the same as above), and the grain diameters ($\mu$m) of crystal grains having a crystal rotation angle of 5° or more were measured. In the determination of the crystal grain diameters, $\Sigma 3$ grain boundaries indicating twin boundaries were considered as intragranular defects.

<Measurement of temperature coefficient of resistance (TCR)>

The thin-film sensor was tested for specific electric resistance p at varied temperatures, and the temperature coefficient of resistance (TCR) was obtained from the results..

In the present invention, the temperature coefficient of resistance is expressed by Formula 1 below:

$$\text{Formula 1: } \alpha = (1/R) \times (dR/dT) \times 10^6$$

$\alpha$: temperature coefficient of resistance (ppm/°C)
T: arbitrary absolute temperature (K)
R: zero-power resistance ($\Omega$) at T (K)

<Orientation Properties>

The vertical section of the laminate and the thin-film sensor produced as mentioned above was ground and smoothed using focused-ion beam (FIB) A longitudinal section of each of the laminate and the thin-film sensor was smoothed by polishing and with focused ion beam (FIB). With respect to the smoothed longitudinal section, image data of the crystal pattern was obtained by EBSD method by means of a scanning electron microscope (JSM-6700F or JSM-7000F manufactured by JEOL Ltd.) that had a FE gun and was equipped with an EBSD apparatus (OIM Analysis, manufactured by TSL Solutions) and also by means of the supplied EBSD analyzer. The image data was analyzed while selecting "Crystal Direction" from the analysis menu of an EBSD analysis program (OIM Analysis, the same as above), under conditions such that the percentage relative to the total crystal grains was obtained of crystal grains wherein the plane direction of (111) planes of the platinum crystal of the electrical resistor was misaligned by not more than 10 degrees from the normal direction (ND) of the laminate or the thin-film sensor. The percentage was defined as the orientation properties. Crystal gains having a crystal rotation angle of 5° or more were recognized to have crystal boundaries with each other, and crystal grains having a crystal rotation angle of 5° or less were collectively recognized as one crystal grain.

<Polar Figure for (111) planes >

As with the <Orientation>, for (111) planes of the platinum crystal of a temperature-sensitive resistor, the polar figure for (111) planes was obtained by selecting the analysis menu "Pole figure" of the EBSD analysis program (OIM Analysis, the same as above).

<Measurements of Surface Roughness Ra and Rz>

The surface roughness Ra and Rz of the thin-film sensor were measured with an optical interferometric three-dimensional structural analysis microscope (New View 5032, manufactured by Zygo Corporation). An area 54 x 72 $\mu$m in size was observed with a x100 Mirau lens using white light. The surface roughness Ra and Rz were determined from the three-dimensional image of the observed surface.

<Adhesion>

The laminate and the thin-film sensor were tested for adhesion between the insulating substrate and the temperature-sensitive resistor by the following wire pull test. Wire pull test procedures
A gold wire (25 $\mu$m in diameter) was bonded to the gold electrode pad (18) of the thin-film chip (thin-film sensor). The gold wire was pulled with a load of about 10 g in the vertical direction relative to the thin-film chip at room temperature. The evaluation criteria were as follows.
AA: The gold electrode pad and the temperature-sensitive resistor were not peeled off from the gold wire and the gold wire was broken.
CC: The gold electrode pad and the temperature-sensitive resistor were peeled off from the gold wire.
[Table 1]

| | TCR (ppm/K) | Crystal Grain Diameters ($\mu$m) | Orientation Properties | Surface Roughness | | Adhesion |
|---|---|---|---|---|---|---|
| | | | | Ra(nm) | Rz($\mu$m) | |
| Comparative Example 1 | 2,500 | 0.081 | 23 | 2.7 | 0.17 | AA |
| Example 1 | 3,200 | 0.37 | 100 | 0.6 | 0.016 | AA |
| Comparative Example 2 | 2,500 | 0.081 | 23 | 2.7 | 0.17 | CC |
| Example 2 | 3,356 | 0.32 | 96 | 166.7 | 1.800 | AA |
| Example 3 | 3,400 | 0.41 | 91 | 142.3 | 1.89 | AA |
| Example 4 | 3,669 | 0.39 | 100 | - | - | AA |
| Comparative Example 3 | 3,160 | 0.19 | 58 | - | - | CC |
| Example 5 | 3,669 | 0.42 | 100 | 23.9 | 0.812 | AA |
| Example 6 | 3,602 | 0.39 | 100 | 3.3 | 0.06 | AA |

(continued)

| | TCR (ppm/K) | Crystal Grain Diameters (μm) | Orientation Properties | Surface Roughness | | Adhesion |
|---|---|---|---|---|---|---|
| | | | | Ra(nm) | Rz(μm) | |
| Example 7 | 3,356 | 0.32 | 96 | 166.7 | 1.80 | AA |
| Comparative Example 4 | 3,326 | 0.56 | 51 | 71.9 | 0.70 | AA |
| Comparative Example 5 | 3,422 | 1.35 | 6 | 6.6 | 0.59 | AA |

**Claims**

1. A laminate comprising:

   an insulating substrate, and a temperature-sensitive resistor made of crystals of a metal based on a platinum.group element and laminated on the insulating substrate; and
   having a percentage of (111) planes of the crystals oriented at 10° or less from the normal direction (ND direction) in a layer of the temperature-sensitive resistor being 90% or more.

2. The laminate according to claim 1, further comprising an adhesion layer made of a material that is based on a transition metal between the insulating substrate and the temperature-sensitive resistor.

3. The laminate according to claim 1 or 2, further comprising a silicon compound layer made of a compound comprising silicon and an element selected from the group consisting of carbon, nitrogen, fluorine and oxygen between the insulating substrate and the adhesion layer.

4. The laminate according to any one of claims 1 to 3, wherein the crystals have a fiber-like orientation texture and (111) planes of the crystals in the fiber-like orientation texture have axis of rotation that is vertical to a layer of the temperature-sensitive resistor.

5. The laminate according to any one of claims 1 to 4, wherein the crystals have a grain diameter of 0.2 μm or more.

6. The laminate according to any one of claims 1 to 5, wherein the platinum group element is platinum.

7. A thin-film sensor comprising the laminate of any one of claims 1 to 6.

8. The thin-film sensor according to claim 7, having the percentage of (111) planes of the crystals oriented at 10° or less from the normal direction (ND direction) in a layer of the temperature-sensitive resistor being 99% or more.

9. The thin-film sensor according to claim 8, wherein the temperature-sensitive resistor has a surface roughness Ra of 50 nm or less.

10. The thin-film sensor according to claim 8 or 9, wherein the temperature-sensitive resistor has a surface roughness Rz of 1 μm or less.

11. The thin-film sensor according to any of claims 8 to 10, wherein the crystals have a grain diameter of 0.4 μm or more.

12. A method for producing the thin-film sensor of any one of claims 8 to 11, comprising laminating a temperature-sensitive resistor made of a crystal of a metal having a platinum group element as a main component thereof on the insulating substrate by sputtering the metal, setting a temperature of the insulating substrate at 400 to 800°C.

13. The method for producing the thin-film sensor according to claim 12, wherein the sputtering is performed under the following conditions:

   Film forming pressure: 0.10 Pa or less; and

Film forming electric power: 50 to 100 W.

14. The thin-film sensor according to claim 8, wherein the temperature-sensitive resistor has a surface roughness Rz of 0.1 $\mu$m or less and the crystals have a grain diameter of 0.3 $\mu$m or more.

15. A method for producing the thin-film sensor of claim 14, comprising:

laminating the temperature-sensitive resistor on the insulating substrate to obtain a temperature-sensitive laminate; and
subjecting the temperature-sensitive laminate to heat treatment in an inert gas atmosphere having an oxygen partial pressure of 0.001 ppt or more to 1 ppm or less.

16. The thin-film sensor according to any one of claims 7 to 11 and 14, which is a sensor selected from the group consisting of a temperature sensor, a flow sensor, a specific heat sensor, a thermal conductivity sensor, a concentration sensor, a liquid identification sensor, a strain sensor, a stress sensor and a humidity sensor.

17. A thin-film sensor module, comprising the thin-film sensor of any one of claims 7 to 11, 14 and 16.

[Fig. 1]

[Fig. 2]

[Fig. 3]

[Fig. 4]

[Fig. 5]

[Fig. 6]

[Fig. 7]

[Fig. 8]

[Fig. 9]

## INTERNATIONAL SEARCH REPORT

| | International application No. |
|---|---|
| | PCT/JP2007/052401 |

**A. CLASSIFICATION OF SUBJECT MATTER**
*H01C7/00*(2006.01)i, *G01K7/18*(2006.01)i, *H01C7/02*(2006.01)i

According to International Patent Classification (IPC) or to both national classification and IPC

**B. FIELDS SEARCHED**

Minimum documentation searched (classification system followed by classification symbols)
H01C7/00, G01K7/18, H01C7/02

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 07-201521 A  (Ricoh Co., Ltd.),<br>04 August, 1995 (04.08.95),<br>Full text; all drawings<br>(Family: none) | 1-3,5-17<br>4 |
| Y | JP 62-159401 A  (Sharp Corp.),<br>15 July, 1987 (15.07.87),<br>Full text<br>& US 4805296 A | 12 |
| A | JP 2001-291607 A  (Mitsui Mining & Smelting Co., Ltd.),<br>19 October, 2001 (19.10.01),<br>Full text; all drawings<br>(Family: none) | 1-17 |

☒  Further documents are listed in the continuation of Box C.    ☐  See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>08 May, 2007 (08.05.07) | Date of mailing of the international search report<br>15 May, 2007 (15.05.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2007/052401 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 61-188901 A  (Nippon Soken, Inc.),<br>22 August, 1986 (22.08.86),<br>Full text; all drawings<br>& US 4705713 A | 1-17 |
| A | JP 02-058801 A  (Matsushita Electric<br>Industrial Co., Ltd.),<br>28 February, 1990 (28.02.90),<br>Full text; all drawings<br>(Family: none) | 1-17 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001291607 A

- JP H11354302 A

### Non-patent literature cited in the description

- **HAKUMAKU.** BIRYUUSHI NO KOUZOU TO BUS-SEI. MARUZEN, 1974, 139-156

- KOU TCR HAKKIN HAKUMAKU NO KAIHATSU. *IEEE Trans. SM.,* 2004, vol. 124 (7), 242-247